# EUROPEAN PATENT APPLICATION

(11) **EP 4 389 365 A1**
(43) Date of publication of application: **26.06.2024**
(21) Application number: 23214401.4
(22) Date of filing: 05.12.2023
(51) Int. Cl.: B25J 9/16

(54) **MOBILE ROBOT**

(30) Priority: 21.12.2022 GB 202219435
(71) Applicant: The University Of Sheffield, Sheffield, Yorkshire S10 2TN (GB)
(72) Inventor: SCRAGGS, Chris, Bristol (GB); HIRST, Adrian, Bristol (GB)
(74) Representative: Abel & Imray LLP

(57) **Abstract**

A mobile robot 1 is disclosed. The mobile robot is for interacting with a workpiece 100 as the mobile robot transports across the ground relative to the workpiece. The mobile robot comprises: a tracker 3 for tracking the workpiece; an end effector 5 for interacting with the workpiece based on feedback from the tracker; and a control system 7. The control system is configured such that when the mobile robot is transporting in a transporting direction 99 across the ground relative to the workpiece such that the tracker is tracking a first region of the workpiece, the control system causes the mobile robot to adjust according to the feedback from the tracker and effect a position of the end effector when interacting the end effector with the second region of the workpiece.

## Description

### BACKGROUND OF THE INVENTION

The present disclosure relates to a mobile robot. More particularly, but not exclusively, this invention concerns a mobile robot that adjusts when the mobile robot is transporting across the ground relative to a workpiece and according to feedback from a tracker tracking the workpiece to effect a position of an end effector of the mobile robot when interacting with the workpiece. The invention also concerns a control system for a mobile robot, a method of interacting with a workpiece, a robotic system, a workpiece, and a computer program comprising instructions, which, when the program is executed by a computer, cause the computer to carry out the method.

Robots comprise end effectors that are used to interact with workpieces. The accuracy of such robots may be calibrated using a separate metrology device. The calibration process may require the robot articulating to a fixed position in relation to the workpiece, and before interacting with the workpiece, using the separate metrology device to verify the accuracy of the robot. Such arrangements may be inefficient and hold up an assembly process.

Robots can be operated using a "dry run" where the robot moves according to an initial program to attempt to follow a target path. During the "dry run", the robot does not initially interact with a workpiece. The actual path of the robot during the "dry run" is measured and analysed so that any deviation from the target path can be corrected by a correction. The robot is then operated again according to a corrected program that uses the correction derived from the "dry run". This process may be inappropriate for high-accuracy operations, such as the manufacture of components in the aerospace, communication and/or defence industries, because variations in workpieces, which need to be tracked, are unaccounted for by the corrected program. Obtaining a correction for each workpiece is inefficient particularly for large workpieces because of an increase in a duration of the "dry run".

Robots articulate within a working envelope. Interaction of the end effector with a workpiece is possible within that working envelope. The region of the workpiece to be interacted with may determine the robot that is used. A second robot (if available) with a relatively large working envelope may be selected for interaction with a relatively large workpiece, rather than a second robot with a relatively small working envelope. The first robot could then be unused. In some instances, a choice of robot may be unavailable. Such processes may be inefficient and/or impractical.

The present invention seeks to mitigate the above-mentioned problems. Alternatively or additionally, the present invention seeks to provide an improved mobile robot, control system for a mobile robot, method of interacting with a workpiece, robotic system, workpiece, and/or computer program.

### SUMMARY OF THE INVENTION

The present invention provides, according to a first aspect, a mobile robot. The mobile robot may be for interacting with a workpiece, optionally as the mobile robot transports across the ground relative to the workpiece. The mobile robot may comprise a tracker. The tracker may be for tracking the workpiece. The mobile robot may comprise an end effector. The end effector may be for interacting with the workpiece, optionally based on feedback from the tracker. The mobile robot may comprise a control system. The control system may be configured such that when the mobile robot is transporting in a transporting direction across the ground relative to the workpiece such that the tracker is tracking a first region of the workpiece, optionally ahead of a second region of the workpiece in the transporting direction, the control system causes the mobile robot to adjust, optionally according to the feedback from the tracker and, optionally to effect a position of the end effector when interacting the end effector with the second region of the workpiece. The workpiece may refer to something that forms part of a manufactured and/or assembled product, for example, a component (for example, comprising a part or parts) of a structure or a system being manufactured and/or assembled. The workpiece may be a component of a structure of an aircraft, such as a wing structure. The mobile robot may be mobile by virtue of the movement of the entire mobile robot across the ground irrespective of movement of the end effector. The mobile robot may be transporting in the transporting direction when the mobile robot moves in bulk across the ground. For example, the mobile robot may be transporting in the transporting direction when components of the mobile robot, in addition to the end effector, move across the ground as a result of the transporting. The first region may be referred to as a downstream region, being downstream of the second region, which may be referred to as an upstream region.

Mobile robots, in accordance with the present invention, may comprise a working envelope that is dynamic by virtue of the mobility of the whole of the mobile robot across the ground as the mobile robot works on a workpiece. The working envelope may be defined by operational movement of the end effector. The working envelope may be static when the mobile robot is not transporting across the ground. Such mobile robots with working envelopes that can move relative to the workpiece effectively extend a region of the workpiece that can be continuously interacted with by an end effector compared to a robot with a working envelope that is static and does not move relative to the workpiece. Such mobile robots allow workpieces that are far greater in size than a reach of the mobile robot to be worked on. Such robots may increase the efficiency and/or accuracy of an assembly process compared to known processes because the same robot is used.

The mobile robot could be self-propelling or propelled by an external force. The transporting may be across and above the ground. The transporting may be on rails. Preferably, the transporting is across and along the ground. The mobile robot may be a ground robot. The ground may be a floor. The transporting may be across the floor, such as a workshop floor. The mobile robot may comprise a propulsion system for transporting the mobile robot, for example across the floor. The transporting may be movement of the mobile robot by the propulsion system across the floor. The transporting direction may be an instantaneous direction of the mobile robot and the transporting direction may vary as the mobile robot transports along a transporting path. The transporting path may be a pre-set path along which the mobile robot is transported. The transporting path may be linear and/or non-linear. The propulsion system may comprise a motor and a power source, such as a battery. The propulsion system may receive power from an external power source. The mobile robot may comprise a vehicle, such as an automated guided vehicle (AGV). The vehicle may comprise the motor and/or the power source. The vehicle may comprise wheels to support the mobile robot and to transport the mobile robot on the floor. The wheels may be for transporting the mobile robot on rails.

The control system may cause the end effector to continuously adjust. For example, the control system may cause the mobile robot to continuously adjust according to the feedback from the tracker and continuously effect the position of the end effector of the mobile robot when interacting the end effector with the second region of the workpiece. The control system may comprise an end effector controller for controlling the end effector and a tracker controller for the controlling the tracker. The control system may directly effect the position of an end effector. The mobile robot may comprise a base. The base may be mounted on the propulsion system. The control system may directly effect the position of the end effector relative to the base.

The mobile robot may comprise a carrier to carry the end effector and cause adjustment of the end effector. The mobile robot may comprise a position sensing arrangement for determining position information about the end effector and/or carrier. The position sensing arrangement may comprise at least one position sensor. The carrier may be powered by a motor or a plurality of motors to move the carrier. The carrier may comprise a moveable arm that moves relative to a base. The moveable arm may move by translation and/or rotation. The carrier may comprise a plurality of joints and/or a plurality of arm portions. The moveable arm may comprise the plurality of joints and/or the plurality of arm portions. The moveable arm may comprise an articulated arm, wherein the articulated arm comprises the plurality of joints and the plurality of arm portions. The position sensing arrangement may determine position information about the plurality of joints and/or the plurality of arm portions.

The tracker may be configured for tracking geometry of the workpiece. The tracker may be configured to track the workpiece by measuring the workpiece, such as the geometry of the workpiece. The control system may be configured to adjust the mobile robot such that the end effector tracks the workpiece according to information identified about the workpiece on the basis of measurements by the tracker. The information identified about the workpiece may be information about the geometry of the workpiece. The information identified about the workpiece may be information about a feature of the workpiece, for example a curvature of the workpiece and/or a change in curvature of the workpiece. The information identified about the workpiece may comprise: a distance of a surface of the workpiece from the tracker and/or an angle of a surface of the workpiece with respect to the tracker. The information identified about the workpiece may be information determined by a determiner. The determiner may be referred to as a programmable logic controller (PLC). The mobile robot may comprise the determiner. The determiner may be located away from the mobile robot. The mobile robot may comprise an on-board communication unit for communicating with the determiner when the determiner is located away from the mobile robot.

The mobile robot may be configured such that, on the basis of the measurements by the tracker, the control system is configured to adjust the mobile robot such that the end effector tracks the workpiece according to a determined datum point, or a connection between a plurality of datum points, formed by a plurality of identifiable features of the workpiece. The determined datum point may be an intersection of a plurality of notional features produced according to the plurality of identifiable features of the workpiece. The mobile robot may comprise a tracker controller, wherein each datum point is calculated by the tracker controller. The plurality of identifiable features may comprise any geometric feature, for example: a planar portion; a curved portion, such as a heel; a depression, such as a groove or a recess; a protuberance, such as a ridge; an overlap; or a hole, such as a blind hole. The plurality of identifiable features may comprise geometric features that exist along the workpiece, for example different geometric features. For example, one of the plurality of identifiable features may comprise a shape that is different to a shape of another one of the plurality of identifiable features. At least one of the plurality of identifiable features may be referred to as an interfay, which forms an interface with another component to be coupled to the workpiece. The plurality of notional features may comprise a notional circle, such as a notional heel circle, and/or a notional line, such as a notional interfay line. The notional circle may be formed by determining a radius of curvature of a curved portion of the workpiece using feedback from the tracker. The notational line may be a direction of a planar or substantially planar surface. The direction may be parallel to a width direction of the workpiece. The datum may comprise an intersection, for example an intersection of the plurality of notional features.

The tracker may be configured to measure the workpiece by emitting a signal and detecting a reflection of the emitted signal. The tracker may comprise a scanner or a plurality of scanners. The or each scanner may be an optical scanner. The at least one scanner may emit the signal and detect the reflection. The at least one scanner may be for measuring the workpiece. The control system may be configured to adjust the mobile robot such that the end effector tracks the workpiece according to information identified about the workpiece on the basis of measurements obtained by the at least one scanner. The at least one scanner may be a laser scanner, optionally configured to emit a laser line. The tracker may comprise two scanners. Each scanner may emit a laser line. One scanner may emit a laser line such that the laser line extends in a first direction and the other scanner may emit a laser line such that the laser line extends in a second direction. The first and second directions may be the same direction. The first and second directions may be parallel to each other. The first and second directions may be a width direction of the workpiece. The plurality of scanners may be side-by-side. The plurality of scanners may be offset from each other in a first direction, such as the transporting direction of the mobile robot. The plurality of scanners may be offset from each other in a second direction, such as a direction perpendicular to the transporting direction of the mobile robot.

The mobile robot may comprise a compliance arrangement. The compliance arrangement may be configured to resist movement of the end effector when interacting with the workpiece. The control system may be configured to adjust the mobile robot and effect the position of the end effector relative to the workpiece according to an allowable amount of resistance by the compliance arrangement. The inventors have found that the compliance arrangement enables the end effector to maintain interaction with the workpiece. The compliance arrangement may constrain the end effector in one direction or directions, and allow deflection in one other direction or directions. The compliance arrangement may comprise a bias to bias a portion and/or component of the end effector. The bias may comprise a compressible material, such as a foam. The bias may pre-load the end effector under a pre-load force. The control system may be configured to adjust the mobile robot and effect the position of the end effector relative to the workpiece by working against the pre-load force, optionally to a predetermined magnitude, such as a predetermined distance of compression of the compressible material. The compliance arrangement may resist rotation of the end effector. The compliance arrangement may comprise a rigid structure to resist rotation of the end effector.

The mobile robot may interact with the workpiece by sealing and/or cleaning the workpiece. The end effector may comprise an applicator for applying a sealant to the workpiece. The applicator may apply sealant using pressure without changing a physical property and/or geometry of the workpiece, for example without permanent deformation of the workpiece. The control system may be configured to cause the end effector to interact with the workpiece by applying the sealant, for example a continuous bead of sealant. The control system may be configured to cause the end effector to interact with the workpiece by applying the sealant in dependence on a speed of transport of the mobile robot. The control system may be configured to cause the end effector to interact with the workpiece by applying the sealant in dependence on a predetermined speed of transport of the mobile robot. The bead may be referred to as a film. The bead may be less than 1mm, 0.5mm, and/or 0.2mm in thickness. A thickness of the bead may be fixed for each run across the workpiece. The end effector may comprise a dispensing system for dispensing sealant to the applicator. The dispensing system may comprise at least one dispenser. The end effector may comprise a nozzle for supplying sealant to the applicator.

The sealant may comprise non-metallic material. The sealant may workable at room temperature. The sealant may comprise or be a curable material. The sealant may be curable to a final state, such that the sealant is flexible in the final state. The end effector may comprise a nozzle coupled between the dispensing system and applicator. The applicator may comprise a reservoir for receiving sealant from each nozzle and dispenser.

The end effector may be a mobile sub-system of the mobile robot, such that the end effector is movable in addition to movement of the mobile robot caused by the transporting. The end effector may comprise a cleaning tool for cleaning the workpiece. The mobile robot may be configured such that the mobile robot interacts with the workpiece by direct and/or indirect surface contact. The mobile robot may be configured to interact with the workpiece by causing an external appearance of the workpiece to change due to the interaction. The end effector may be a tool that can interact with the workpiece to cause a change in an external appearance of the workpiece due to the interaction. The feedback via the tracker may be feedback via the tracker directly interacting with the workpiece, for example scanning a surface of the workpiece.

According to a second aspect of the invention, a control system is provided. The control system may be for a mobile robot, such as the mobile robot according to the first aspect and/or the robot of the robotic system of the fourth aspect described below. The control system may be configured such that when the mobile robot is transporting in a transporting direction across the ground relative to a workpiece such that a tracker is tracking a first region of the workpiece, optionally ahead of a second region of the workpiece in the transporting direction, the control system causes the mobile robot to adjust according to feedback from the tracker and effect a position of an end effector of the mobile robot when interacting the end effector with the second region of the workpiece. The control system may cause the end effector to continuously adjust. For example, the control system may cause the mobile robot to continuously adjust according to the feedback from the tracker and continuously effect the position of the end effector of the mobile robot when interacting the end effector with the second region of the workpiece.

According to a third aspect of the invention, a method of interacting with a workpiece is provided. The method may comprise providing a mobile robot. The mobile robot may comprise an end effector. The mobile robot may comprise a tracker. The method may comprise interacting the end effector with the workpiece, and optionally tracking the workpiece by the tracker. The method may comprise, when the mobile robot is transporting in a transporting direction across the ground relative to the workpiece such that the tracker is tracking a first region of the workpiece, optionally ahead of a second region of the workpiece in the transporting direction, adjusting the mobile robot, by a control system and according to feedback from the tracker, to effect a position of the end effector relative to the workpiece to maintain interaction of the end effector with the second region of the workpiece trailing the first region in the transporting direction.

The interacting may comprise interacting the end effector with the workpiece and transporting the mobile robot by a vehicle, such as an AGV. The interacting may comprise providing a layer of continuous surface treatment on the workpiece on the basis of the interaction between the end effector with the workpiece when the mobile robot is transporting in the transporting direction

The end effector may comprise a working envelope that is restricted relative to the workpiece when the mobile robot is stationary. The working envelope may be moveable relative to the workpiece, optionally by virtue of the mobile robot transporting relative to the workpiece.

The adjusting the mobile robot may comprise continuously adjusting the end effector by the control system. For example, the adjusting may comprise adjusting the mobile robot, by the control system and according to the feedback from the tracker, to continuously effect the position of the end effector relative to the workpiece to maintain interaction of the end effector with the second region of the workpiece trailing the first region in the transporting direction. The adjusting may comprise adjusting the mobile robot to maintain interaction between the end effector and the workpiece to an extent of the workpiece that exceeds a maximum extent of the working envelope. The working envelope may comprise a dimension that is twice a maximum reach of the end effector from a centre of movement of the end effector. The dimension that is twice a maximum reach of the end effector may be referred to as the span of the robot. The span of the robot may correspond to a maximum dimension of the working envelope.

According to a fourth aspect of the invention, a robotic system is provided. The robotic system may comprise a vehicle. The vehicle may be moveable across a floor, such as a workshop floor. The vehicle may move in a transporting direction. The robotic system may comprise a robot. The robot may be mounted on the vehicle. The robot may comprise a tracker for tracking the workpiece. The robot may comprise an end effector to interact with the workpiece, optionally according to feedback from the tracker tracking the workpiece, optionally in advance of the end effector, optionally in the transporting direction. The robotic system may comprise a control system configured to, when the robotic system is moving across the floor in the transporting direction such that the tracker is tracking a first region of the workpiece, optionally in advance of a second region of the workpiece in the transporting direction, adjust the robot, optionally according to the feedback from the tracker and optionally to effect a position of the end effector relative to the workpiece when interacting with the second region behind the first region in the transporting direction and during movement of the vehicle and the robot across the floor in the transporting direction.

The control system may be configured to continuously adjust according to the feedback from the tracker. For example, the control system may be configured to, when the robotic system is moving across the floor in the transporting direction such that the tracker is tracking the first region of the workpiece, optionally in advance of the second region of the workpiece in the transporting direction, continuously adjust the robot according to the feedback from the tracker and continuously effect the position of the end effector relative to the workpiece when interacting with the second region behind the first region in the transporting direction and during movement of the vehicle and the robot across the floor in the transporting direction. The robot may comprise the control system.

The robotic system may comprise a determiner. The robot may comprise the determiner. The determiner may be mounted on the vehicle. The determiner may communicate by a wired connection to the robot. The determiner may wirelessly communicate with the robot. The determiner may be configured to determine a path correction of the end effector. The path correction may comprise correction information by which to adjust the robot and position the end effector relative to the workpiece along a process path. The path correction may be on the basis of a single or a plurality of identifiable features of the workpiece, optionally obtained from measurements by the tracker. The control system may be configured to adjust the robot according to the path correction. The correction information may comprise correction of at least one degree of freedom of the robot. The correction information may comprise a series of movements. The series of movements may comprise linear and/or rotational movements. The correction information may exclude the transporting direction.

The transporting direction may be a direction along which the vehicle transports the robot. The robotic system may be arranged such that as the robot and vehicle move in the transporting direction the tracker may be arranged to track ahead of the end effector interacting with the workpiece in the transporting direction. The transporting direction may be an instantaneous direction of the vehicle and the transporting direction may vary as the vehicle transports along a transporting path. The transporting path may be a pre-set path along which the vehicle is transported. The transporting path may be linear and/or non-linear. The process path may comprise only minor deviations from the transporting path in plan-view. The tracker may comprise a plurality of scanners and the robotic system may be arranged such that as the robot and vehicle move in the transporting direction one of the scanners is arranged behind the other in the transporting direction.

The determiner may be separate from the robot such that the path correction is not determined by the robot but is receivable by the robot from the determiner. The determiner may be remote from the robot. The remote location may be the same building or a different building, for example. The determiner may be configured to determine the path correction according to historical measurements by the tracker associated with a measurement region of the workpiece, optionally obtained prior to the end effector reaching the measurement region. The historical measurements may be obtained in the same pass in which the end effector interacts with the workpiece. The historical measurements may be obtained momentarily before the end effector reaches the measurement region. The determiner may be configured to pass the path correction through a mathematical process, such as a filter. The filter may filter correction information such that sudden unwanted movement by the vehicle is compensated when adjusting the robot and effecting the end effector. The control system may be configured to adjust the robot according to the path correction passed through the filter. The filter may comprise a moving average such that the path correction used to adjust the robot is a moving average path correction.

The vehicle may be a ground vehicle. The vehicle may be a wheeled vehicle. The vehicle may be an automated guided vehicle (AGV). Movement of the AGV may be pre-programmed. The AGV may be programmed to follow a path along the workpiece, such as a length of the workpiece.

The robot may comprise a tool centre point (TCP). The TCP may be a datum point representing a known fixed position on the robot. The determiner may determine the path correction on the basis of the TCP. The determiner may be configured to send a single correction at a time to the robot. The correction information may comprise adjustments of the robot, for example the end effector, relative to the TCP.

The robotic system may comprise a memory. The robot may comprise the memory. The memory may be arranged to store measurements by the tracker and/or correction information about the path correction. The robot may comprise: a transmitter for sending information to the memory; and a receiver for receiving information from the memory. The memory may be a remote memory, located physically away from the robot. The determiner may comprise the memory. The determiner may comprise the transmitter and receiver.

According to a fifth aspect of the invention, a workpiece is provided. The workpiece may be a structure or a component of a structure of or for a vehicle or a structure of or for infrastructure. The workpiece may be an aircraft structure or a component of or for an aircraft structure, such as a component of or for a wing structure of or for an aircraft, for example, a spar of a wing structure of or for an aircraft. The workpiece may be a structure or a component of a structure of or for a land vehicle or a marine vehicle. The workpiece may be a structure or a component of a structure of or for on ground infrastructure or infrastructure for use in space. The workpiece may have a surface treated by a robot. The robot may be the mobile robot according to the first aspect. The workpiece may comprise a feature, such as a layer of treatment, applied by the robot. The layer of treatment may be a film of sealant, such as a continuous film or bead of sealant. The robot may be mounted on a vehicle. The robot and vehicle may be the robot and vehicle of the robotic system according to the fourth aspect. The surface may have a dimension greater than a reach of the robot such that the surface comprises a layer of continuous treatment on the basis of interaction between an end effector of the robot with the workpiece during transportation of the robot by the vehicle across a floor in a transporting direction. The interaction may be based on the robot being adjusted to effect a position of the end effector based on feedback from a tracker tracking the workpiece, optionally ahead of the end effector interacting with the workpiece in the transporting direction. The workpiece may be treated by the mobile robot according to the first aspect and/or the robotic system according to the fourth aspect, and/or the method according to the third aspect. The robot may be continuously adjusted to continuously effect the position of the end effector based on the feedback from the tracker tracking the workpiece, optionally ahead of the end effector interacting with the workpiece in the transporting direction.

According to a sixth aspect of the invention, a computer program comprising instructions is provided. The computer program, which, when the program is executed by a computer, may cause the computer to carry out the method according to the third aspect.

According to a seventh aspect of the invention, a computer-readable storage medium is provided. The computer-readable storage medium may comprise instructions, which, when executed by a computer, cause the computer to carry out the method according to the third aspect.

It will of course be appreciated that features described in relation to one aspect of the present invention may be incorporated into other aspects of the present invention. For example, the method of the invention may incorporate any of the features described with reference to the mobile robot and/or robotic system of the invention and vice versa. The mobile robot may comprise any of the features of the robotic system. As disclosed in relation to the fifth aspect, the workpiece in any other aspect may be a structure or a component of a structure of or for a vehicle or a structure of or for infrastructure. The workpiece may be an aircraft structure or a component of or for an aircraft structure, such as a component of or for a wing structure of or for an aircraft, for example, a spar of a wing structure of or for an aircraft. The workpiece may be a structure or a component of a structure of or for a land vehicle or a marine vehicle. The workpiece may be a structure or a component of a structure of or for on ground infrastructure or infrastructure for use in space.

### DESCRIPTION OF THE DRAWINGS

Embodiments of the present invention will now be described by way of example only with reference to the accompanying schematic drawings of which:
Figure 1 shows a schematic view of a robotic system according to a first embodiment of the invention;
Figure 2 shows a schematic cross-section view of a workpiece in the form of a spar for an aircraft;
Figure 3 shows a representation of interconnecting datum points;
Figure 4 shows a schematic perspective view of an end effector and tracker of the robotic system according to the first embodiment of the invention;
Figure 5 shows a schematic side view of a compliance arrangement of the robotic system according to the first embodiment of the invention;
Figure 6 shows a front view of an aircraft according to a second embodiment of the invention; and
Figure 7 shows an example method in accordance with the invention.

### DETAILED DESCRIPTION

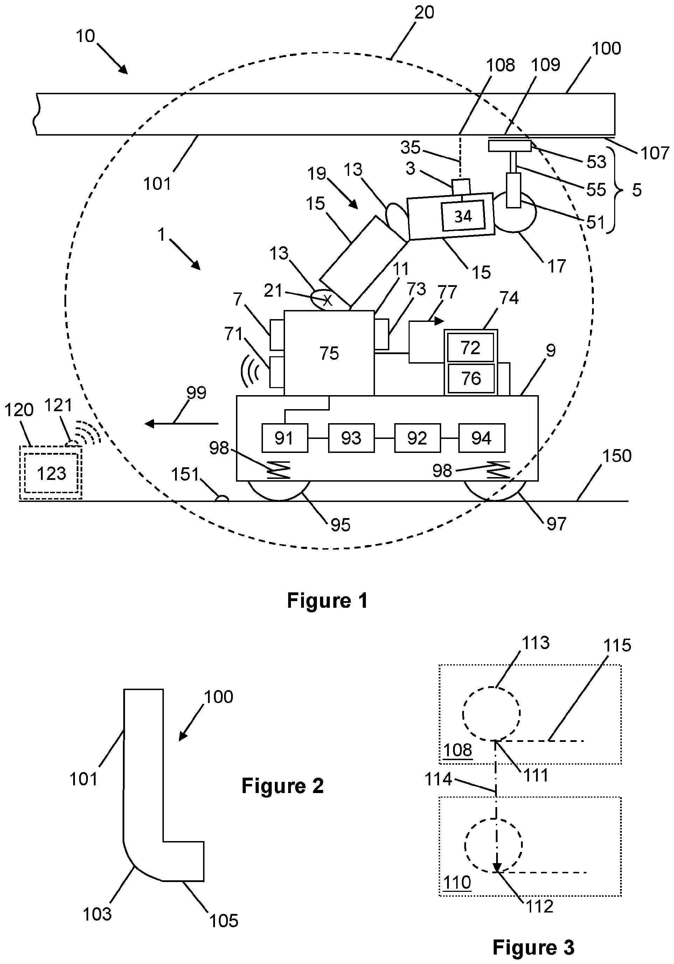

Figure 1 shows a schematic view of a robotic system 10 according to a first embodiment. The robotic system 10 comprises a mobile robot 1. The mobile robot 1 is supported by a floor 150 comprising a bump 151. The bump 151 is representative of a surface imperfection, such as a surface defect, in the floor 150. The mobile robot 1 is shown positioned below a spar 100. The spar 100 is a component for a wing structure of an aircraft. The spar 100 comprises a treatment surface 101 and a layer of sealant 107 applied by the mobile robot 1 to the treatment surface 101. As shown in Figure 2, the spar 100 comprises identifiable features in the form of a heel 103 and an interfay 105. The heel 103 is a bend of the spar 100 and the interfay 105 is a surface forming an interface with another component, such as a cover (not shown) of the spar 100. The heel 103 and interfay 105 run along the length of the spar 100.

The mobile robot 1 comprises an automated guided vehicle (AGV) 9 and a robot 11 mounted on the AGV 9. The robot 11 is powered by a power cable 77 from a power source (not shown). The AGV 9 comprises wheels 95, 97 to transport the robot 11 across and along the floor 150, for example in a transporting direction 99. At least one of the wheels 95, 97 is steerable to change the transporting direction 99. The AGV 9 also comprises suspension 98. The AGV 9 comprises a motor 93 to drive the wheels 95, 97, and a battery 91 to power the motor 93. In some embodiments, the battery 91 also powers the robot 11. The AGV 9 comprises a controller 92 to control a speed of the AGV 9 and a speed sensor 94 to measure the speed of the AGV 9. The controller 92 may communicate the speed of the AGV 9 to another device. The robot 11 is transportable across the floor 150 by the AGV 9. Without the AGV 9, the robot 11 would be fixed on the floor 150 and would therefore be immobile (in the sense of transportation across the floor 150). The AGV 9 therefore enables bulk movement of the robot 11. That is, the robot 11 is a mobile robot 1 because it is capable of bulk movement across the floor 150 when transporting.

The mobile robot 1 comprises a determiner 74 mounted on the AGV 9 and communicates with the robot 11 by a wired electrical connection. The determiner 74 may be referred to as a programmable logic controller (PLC). The determiner 74 is optionally powered by the AGV 9. The determiner comprises a memory 72 and a data filter 76. An alternative determiner 120 is shown for illustrative purposes. The alternative determiner 120 communicates with the robot 11 wirelessly. The alternative determiner 120 comprises a remote communication unit 121 and a data filter 123. The determiner 120 is separate from the mobile robot 1 and shown located away from the mobile robot 1 (for illustration purposes, the determiner is on the floor 150). The location of the determiner 120 is not restricted to the floor 150 and may include any location away from the mobile robot 1 as long as the remote communication unit 121 can communicate with the mobile robot 1. The determiner 120 can therefore be in a different environment, such as a different building, to the mobile robot 1.

The robot 11 comprises a control system 7, an on-board communication unit 71, a position sensing arrangement 73, a base 75, an articulated arm 19, a tracker 3, a tracker controller 34, and an end effector 5. The articulated arm 19 comprises two arm joints 13, an end joint 17, and two arm portions 15. One of the arm joints 13 is connected to the base 75 and one of the two arm portions 15. The other one of the arm joints 13 is connected to both arm portions 15. The end joint 17 is connected to one of the two arm portions 15 and the end effector 5. Each of the joints 13, 17 is moveable about two axes, such that the robot 11 comprises six axes. Each of the two axes of movement of each joint 13, 17 are perpendicular to each other. The on-board communication unit 71 can send data to, and receive data from, a memory of the alternative determiner 120 via the remote communication unit 121.

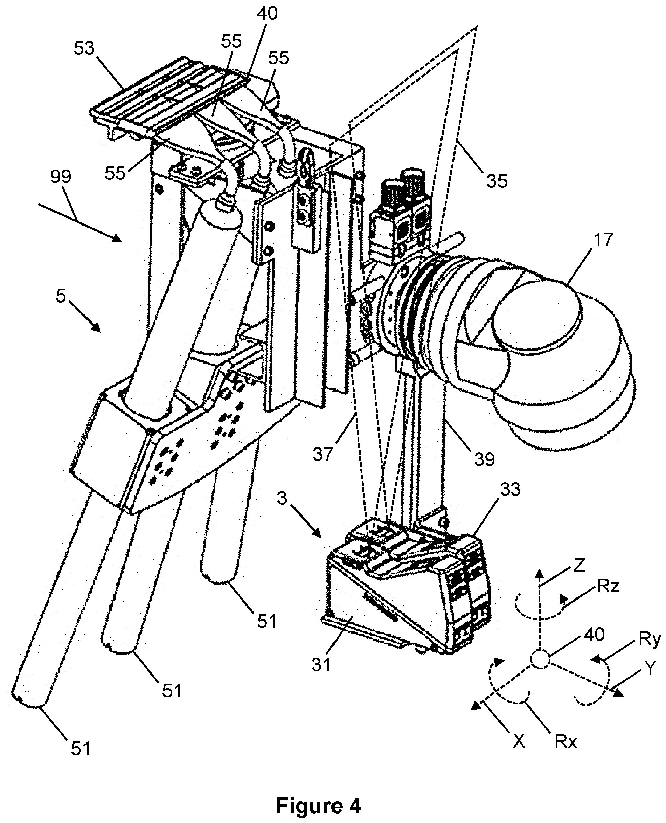

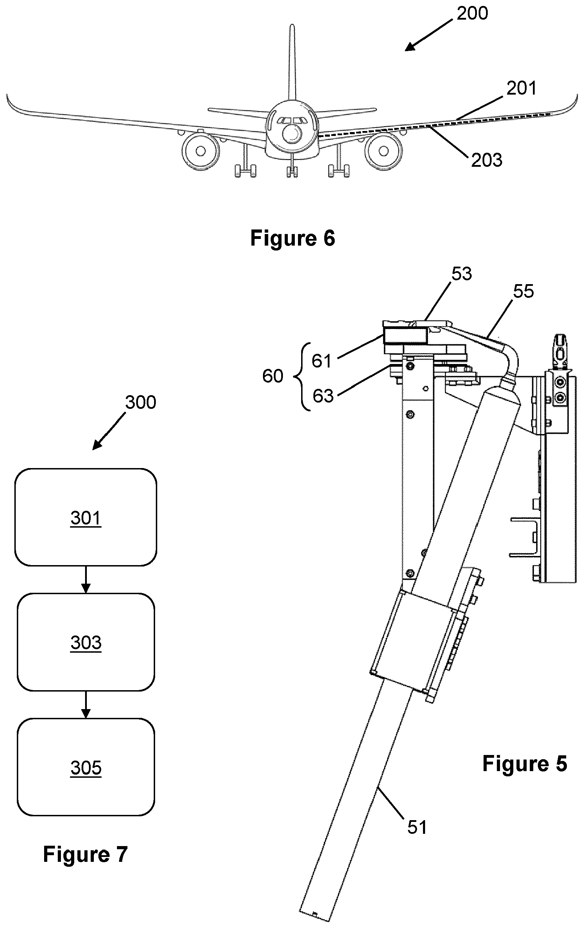

As also shown by Figures 4 and 5, the end effector 5 comprises three dispensers 51 (see Figure 4), three nozzles 55 each connected to a dispenser 51 (see Figure 4), an applicator 53 connected to the three nozzles 55, and a compliance arrangement 60. The applicator 53 is in the form of a spatula. The nozzles 55 are made from 3D printed plastic, which allows them to flex. Each nozzle 55 is able to flex relative to the respective dispenser 51. Each dispenser 51 is a receptacle storing sealant. Each nozzle 55 feeds sealant from the respective dispenser 51 to a different part of the same side of the same applicator 53.

The compliance arrangement 60 comprises an end bias 61. The end bias 61 is compressible and is made from foam. The compliance arrangement 60 biases the applicator 53 and three nozzles 55 away from the dispensers 51 by the end bias 61. The compliance arrangement 60 comprises a structure 63 interconnecting the end bias 61 and dispensers 51. The structure 63 fixes the relative position of the dispensers 51, opposes forces exerted on the end bias 61 that flexes the nozzles 55, and allows the dispensers 51 and end bias 61 to move relative to the base 75 of the robot 11.

As shown by Figure 4, the tracker 3 comprises a first laser line scanner 31 and a second laser line scanner 33. The mobile robot 1 comprises a bracket 39 coupled to the end joint 17 of the articulated arm 19. The bracket 39 extends away from the end joint 17 in a direction away from the applicator 53. The scanners 31, 33 are arranged at one end of the bracket 39, such that the bracket 39 is used to create a space between the applicator 53 and the scanners 31, 33.

The first laser line scanner 31 emits a first width laser line 37 and the second laser line scanner 33 emits a second width laser line 35. The notation "width" in this sense is indicative of the width dimension of the spar 100 that is to be scanned by the respective laser line scanner 31, 33.

As shown in Figure 1, the end effector 5 comprises a working envelope 20 and a centre of movement 21. The working envelope 20 is three-dimensional although only two dimensions (vertical and horizontal) are illustrated in Figure 1. The working envelope 20 represents the physical boundary of the end effector 5. The physical boundary is the working limit of the end effector 5. The mobile robot 1 has a reach defined by a linear distance from the centre of movement 21 of the end effector 5 to the applicator 53. A maximum extent of the working envelope 20 is twice the reach of the mobile robot 1. In Figure 1, the maximum extent of the working envelope 20 of the mobile robot 1 is the diameter of the working envelope 20, as shown by the dashed line.

The mobile robot 1 is set up with a tool centre point (TCP) 40, as shown in Figure 4. The TCP 40 is a datum point and represents a known fixed position on the robot 11. In this embodiment, the TCP 40 is a corner location on the applicator 53 and at a front heel edge. Another example location of the TCP 40 is a location of a point of connection between the middle nozzle 55 and the middle dispenser 51 of the end effector 5.

The mobile robot 1 is controllable about six degrees of freedom (DoF). A representative TCP 40 at the bottom-right of Figure 4 indicates the six axes of movement (corresponding to the six DoF) of the TCP 40. These six DoF can therefore be discussed in relation to the movement of the TCP 40. Some rotational movements can require multiple axes of movement.

The TCP 40 is moveable along the Y-axis (corresponding to the Y reference in Figure 4) by the AGV 9 when the AGV 9 transports the robot 11 forwards in the transporting direction 99 corresponding to a pre-programmed line. The TCP 40 can move vertically along the Z-axis and horizontally along the X-axis (corresponding to the Z and X references in Figure 4, respectively). The TCP 40 is rotatable about each of the Y-axis, Z-axis, and X-axis (corresponding to the Ry, Rz, and Rx references in Figure 4, respectively). The TCP 40 is movable along and about each of the Y-axis, Z-axis, and X-axis by articulation of the articulated arm 19 by the two arm portions 15, two arm joints 13, and end j oint 17 working in isolation and/or in combination.

The process of interacting the mobile robot 1 with the spar 100 is now described. The mobile robot 1 is able to apply a continuous bead of sealant to the spar 100 to an extent of the spar 100 that is beyond the working envelope 20 of the mobile robot 1. The mobile robot 1 can do this when the robot 11 is mounted on the AGV 9 and the robot 11 adjusts accordingly using determined position information about the articulated arm 19.

The AGV 9 is first moved proximate to the spar 100 such that the tracker 3 is underneath the spar 100 and roughly located in its starting position adjacent a measurement region 108 of the spar 100. The mobile robot 1 uses the tracker 3 to scan the treatment surface 101 of the spar 100 to detect dimensional information about the spar 100 and find the starting position by determining a datum point of the spar 100 using that dimensional information. How the mobile robot 1 does this is explained in more detail below. At the start of the process, the applicator 53 is not adjacent a treatment region 109 of the spar 100 (previously corresponding to the measurement region 108) until the tracker 3 moves past the starting position and along the spar 100. The tracker 3 scans the measurement region 108, as shown by the projection of the second width laser line 35 in Figure 1, and the applicator 53, once arrived at the measurement region 108, treats the measurement region 108 to form a treatment region 109, as shown in Figure 1.

The applicator 53 faces the treatment surface 101 of the spar 100 such that sealant from the dispensers 51 via the nozzles 55 arrives at an upper side of the applicator 53 and an under side of the spar 100. A flow rate of dispensing by the dispensers 51 is dependent on the speed of the AGV 9 and is predetermined. Arranging the applicator 53 in this way relative to the spar 100 mitigates the risk of sealant dripping from the applicator 53 and ensures the sealant stays within reservoirs of the applicator 53 until the sealant is applied to the treatment surface 101.

The mobile robot 1 is perception driven. Therefore, rather than following a pre-programmed path, the mobile robot 1 learns where to go. As mentioned above, the tracker 3 detects dimensional information about the spar 100 by measuring the measurement region 108 and scanning the treatment surface 101 of the spar 100. The tracker 3 therefore assists in the determination of the datum point of the spar 100 associated with the measurement region 108 and sealant is applied to the treatment surface 101 by the applicator 53 in the treatment region 109 according to historical correction information obtained from the tracker 3 moments before (and optionally accessed from the memory 72).

The first laser line scanner 31 scans in the width direction of the spar 100 by emitting the first width laser line 37 towards the spar 100 and detecting a response to the emission. The second laser line scanner 33 also scans in the width direction of the spar 100 by emitting the second width laser line 35 towards the spar 100 and detecting a response to the emission. The tracker 3 scans the measurement region 108 of the spar 100 to identify information about the spar 100. For example, the tracker 3 determines distances and angles associated with the heel 103 and interfay 105 of the spar 100. Measurement information about the heel 103 and interfay 105, as obtained by the tracker 3, is sent to the tracker controller 34. The tracker controller 34 interprets the measurement information and calculates the datum point for that measurement region 108. The determiner 74 converts the datum point to co-ordinate data that is used by the control system 7 to adjust the robot 11.

The datum point is obtained by finding a first intersection 111 of a notional heel circle 113 and a notional interfay line 115, as shown by the dashed curved and straight lines in Figure 3, respectively. The notional heel circle 113 is formed by determining a radius of curvature of the heel 103 using feedback from the tracker 3. The notational interfay line 115 is a direction of the interfay, for example, a width direction parallel to the width of the spar 100. The notational interfay line 115 is a tangent of the notional heel circle 113 in the width direction.

In addition to the calculation of the datum point by the tracker controller 34, the determiner 74 (or alternative determiner 120) calculates various other parameters about the measurement region 108, using the measurement information obtained by the tracker 3. For example, the determiner 74 uses the measurement information to determine a path correction comprising correction information, by which to adjust the robot 11 and position the end effector 5 relative to the spar 100. The determiner 74 converts the measurement information into the correction information using mathematical operations. The correction information allows for the correction of five DoF of the robot 11 because one of the DoF is the transporting direction of the AGV 9 in the transporting direction 99.

The determiner 74 determines first correction information relating to a correction of a distance of the end effector 5 in the X-axis direction, for example. The first correction information is determined by a distance between the TCP 40 and the intersection 111 of the notional heel circle 113 and the notional interfay line 115 as measured by the tracker 3.

The determiner 74 determines second correction information relating to a correction of a distance of the end effector 5 in the Z-axis direction, for example. The second correction information is determined by a distance from the first laser line scanner 31 to the interfay 105 as measured by the tracker 3.

The determiner 74 determines third correction information relating to a correction of an angle of rotation of the end effector 5 in the Rx direction. The third correction information is determined by a distance in the Z-axis direction between the first laser line scanner 31 and the second laser line scanner 33 as measured by the tracker 3.

The determiner 74 determines fourth correction information relating to a correction of an angle of rotation of the end effector 5 in the Ry direction. The fourth correction information is determined by an angle of the notational interfay line 115 to the second laser line scanner 33 as measured by the tracker 3.

Finally, the determiner 74 determines fifth correction information relating to a correction of an angle of rotation of the end effector 5 in the Rz direction. The fifth correction information is determined by a distance between a location of the heel 103 and each of the first laser line scanner 31 and the second laser line scanner 33 as measured by the tracker 3.

The determiner 74 sends the correction information, comprising the first-to-fifth correction information, to the mobile robot 1 (via the remote communication unit 121 and the on-board communication unit 71 when using the alternative determiner 120). The control system 7 can then use the correction information as soon as it is required, for example, as the applicator 53 approaches the measurement region 108 and moves along the spar 100 or when the applicator 53 is adjacent the measurement region 108, by adjusting the mobile robot 1 and effecting a position of the end effector 5.

The mobile robot 1 applies the sealant to the treatment surface 101 by engaging the applicator 53 with the treatment surface 101 in the treatment region 109 and dispensing sealant from the dispensers 51 to the applicator 53. The robot 11 is adjusted to move the end effector 5 in position by articulating the articulated arm 19. The robot 11 exerts pressure on the treatment surface 101 against the bias of the foam end bias 61 of the compliance arrangement 60 so that the sealant is dispensed in a controlled manner. The sealant is dispensed to produce the continuous bead of sealant to the spar 100, wherein pressure is exerted on the treatment surface 101 by the end bias 61 to keep sufficient contact with the spar 100 and a thickness of the layer of sealant 107 is applied. The mobile robot 1 accurately applies the continuous bead of sealant by moving in the transport direction 99 by the AGV 9 while adjusting the robot 11 and effecting a position of the end effector 5 relative to the spar 100. The AGV 9 effectively moves along a path and all adjustments are performed by the articulated arm 19.

As the applicator 53 moves away from the treatment region 109 and approaches the measurement region 108 (corresponding to a subsequent, second treatment region), the control system 7 of the robot 11 adjusts the robot 11 according to the historical correction information about the measurement region 108 determined on the fly in the same pass. That is, the correction information is obtained continuously. The robot 11 articulates the articulated arm 19 and effects the position of the end effector 5 relative to the treatment surface 101, based on the received first-to-fifth correction information about the measurement region 108. The applicator 53 applies sealant to the subsequent treatment region according to the feedback from the tracker 3.

When the applicator 53 is treating the measurement region 108, the tracker 3 is scanning a subsequent (second) measurement region 110 further along the spar 100 and ahead of the applicator 53. The tracker 3 thus tracks a region of the workpiece that is in advance (fore) of another (aft) region that is interacted on by the applicator 53 and lags behind. The tracker 3 scans the spar 100 and sends further measurement information to the tracker controller 34. The tracker controller 34 uses the further measurement information to calculate a subsequent (second) datum point and the determiner 74 converts the subsequent datum point to co-ordinate data that is used by the control system 7 to adjust the robot 11.

Figure 3 shows a second intersection 112, representing the subsequent datum point for the subsequent measurement region 110 (corresponding to a third treatment region) along the length of the spar 100. A connection path 114 between the two intersections 111, 112 is shown by the dash-dot line with an end arrow at the second intersection 112 in Figure 3. The connection path 114 is indicative of a path along which the applicator 53 travels when continuously interacting with the spar 100 according to movement of the AGV 9 and adjustment of the end effector 5.

As the applicator 53 approaches the subsequent measurement region 110, the control system 7 of the robot 11 adjusts the robot 11 according to the historical correction information about the subsequent measurement region 110. That is, the control system 7 is constantly adjusting the robot 11 according to feedback obtained moments before in the same pass. The robot 11 articulates the articulated arm 19 and effects the position of the end effector 5 relative to the treatment surface 101, based on the received first-to-fifth correction information determined by the further measurement information. The adjustability of the mobile robot 1 when moving along the spar 100 enables the mobile robot 1 to take account of changes in geometry between different spars.

The mobile robot 1 continues along the length of the spar 100 scanning ahead of the application of sealant. Multiple measurements are taken each second and the robot 11 is adjusted accordingly. Thus, the tracker controller 34 calculates a multiplicity of datum points on the spar 100 for each of a multiplicity of measurement regions, wherein each measurement region corresponds to a future treatment region. The determiner 74 subsequently converts the multiplicity of datum points to co-ordinate data that is used by the control system 7 to adjust the robot 11. The control system 7 of the robot 11 subsequently uses the historical correction information about the spar 100 to adjust the robot 11 and apply the continuous bead of sealant in an accurate and controlled manner.

Imperfections in the floor 150, over which the AGV 9 travels, can be taken into account by the mobile robot 1 by applying the data filter 123. The correction information is passed through the data filter 123, such that any sudden deviation in measurement information caused by the AGV 9 riding over the bump 151 in the floor 150, for example, does not cause an overreaction of adjustments of the robot 11. The data filter 123 is a moving average of the correction information. For example, the determiner 74 passes the correction information through the data filter 76 to obtain the moving average of the first-to-fifth correction information before the filtered correction information is sent to the robot 11 (optionally via the on-board communication unit 71 when the alternative determiner 120 is used). The use of the data filter 123 is able to dampen the mechanical response of the AGV 9 and minimise noise on the data sent to the robot 11. The inventors have found that the AGV 9 will travel over the bump 151 and recover, which can cause the robot 11 to over-react. This over-reaction of the robot 11, combined with the suspension 98 of the AGV 9, can lead to an oscillation of the end effector 5, or 'fish-tailing' effect, leading to large deviations in the end effector 5. The moving average filters may remove this oscillation effect, which allows the end effector 5 to remain within accuracy requirements even as the AGV 9 travels over surface defects.

Once the continuous bead of sealant is applied to the treatment surface 101 of the spar 100, the applicator 53 can physically disengage with the spar 100. The mobile robot 1 stops applying sealant when indicia indicating an end of the treatment surface 101 is detected, such as an edge of the spar 100. In other embodiments, the mobile robot 1 applies sealant until the AGV 9 has travelled a certain predetermined distance.

Although the working envelope 20 of the mobile robot 1 is fixed, the feedback from the tracker 3, and subsequent adjustment of the robot 11 according to that feedback whilst transporting relative to the workpiece, enables spars with treatment surfaces greater than the working envelope 20 to be treated. The mobile robot 1 is therefore efficient and adaptable.

Figure 6 shows an aircraft 200 comprising a wing structure 201, and a spar 203. The spar 203 is a component of the wing structure 201 of the aircraft 200. The spar 203 comprises a layer of sealant that is applied by the mobile robot 1 described above according to the first embodiment (for example, the layer of sealant 107).

Figure 7 shows a method 300 of interacting with a workpiece. An example workpiece is the spar 100 as described above according to the first embodiment.

The method 300 comprises providing 301 a mobile robot comprising an end effector and a tracker. An example mobile robot is the mobile robot 1 according to the first embodiment.

The method 300 comprises interacting 303 the end effector with the workpiece and tracking the workpiece by the tracker. An example end effector and tracker is the end effector 5 and tracker 3 according to the first embodiment, respectively.

The method 300 comprises, when the mobile robot is transporting in a transporting direction across the ground relative to the workpiece such that the tracker is tracking a first region of the workpiece, optionally ahead of a second region of the workpiece in the transporting direction, adjusting 305 the mobile robot, by a control system and according to feedback from the tracker, to effect a position of the end effector relative to the workpiece to maintain interaction of the end effector with the second region of the workpiece trailing the first region in the transporting direction. An example control system is the control system 7 according to the first embodiment. An example first region is the measurement region 108 of the spar 100 and an example second region is the treatment region 109 of the spar 100 according to the first embodiment and shown in Figure 1.

Optionally, the method 300 comprises interacting 303 the end effector with the workpiece and transporting the mobile robot by a vehicle, such as the AGV 9 as described above according to the first embodiment.

Optionally, the end effector comprises a working envelope that is restricted relative to the workpiece when the mobile robot is stationary, and the working envelope is moveable relative to the workpiece by virtue of the mobile robot transporting relative to the workpiece. An example working envelope is the working envelope 20 according to the first embodiment.

Optionally, the adjusting 305 comprises adjusting the mobile robot to maintain interaction between the end effector and the workpiece to an extent of the workpiece that exceeds a maximum extent of the working envelope.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In some embodiments, the robot 11 may be powered by a power source that is not the battery 91 of the AGV 9. For example, a service unit that services the end effector 5 may power the robot 11. The service unit may supply a plurality of services to the robot 11 such as power and/or data. For example, the service unit may comprise the determiner 74 (or the alternative determiner 120) and at least one electrical cable may extent between the service unit and the robot 11.

In some embodiments, the laser line scanners may scan in a "length" direction of the workpiece rather than in a "width" direction. In some embodiments, a first region of the workpiece, for example the spar 100, being tracked by the tracker 3 may be behind a second region of the workpiece being interacted on by the end effector 5 in the transporting direction 99, rather than being ahead of the second region.

In some embodiments, the memory 72 may be a remote memory positioned away from the mobile robot 1. The mobile robot 1 may comprise a transmitter and receiver for sending and receiving information to and from the remote memory. The on-board communication unit 71 may comprise the transmitter and receiver that communicates with the remote memory.

In some embodiments, the end bias 61 may be made from a material other than foam. For example, the end bias 61 may be made from a flexible material that is configured to bend but not compress during normal operation of the mobile robot 1.

In some embodiments, the number of joints and arm portions of the articulated arm 19 may be different to that shown in the first embodiment. For example, the mobile robot 1 may comprise more or less than three joints and/or more or less than two arm portions.

In some embodiments, the mobile robot 1 may transport using means other than wheels 95, 97.

In some embodiments, the workpiece may be something other than a spar 100 for an aircraft. For example, the workpiece may be a structure or a component of or for a structure for a land vehicle or a marine vehicle or a structure or a component of a structure of or for infrastructure (for example, on ground or in space infrastructure). The term "workpiece" may refer to something that forms part of a manufactured and/or assembled product or system being manufactured and/or assembled. The workpiece is worked on by the mobile robot 1, and may be assembled to other workpieces to form an assembly of workpieces.

In some embodiments, the mobile robot 1 may interact with the treatment surface 101 of the workpiece by means other than applying sealant. For example, the mobile robot 1 may clean the workpiece, for example by a plasma cleaning tool. The end effector 5 may therefore comprise a cleaning tool, rather than an applicator 53 for applying sealant. The mobile robot 1 may be operable between two configurations: a first configuration in which the mobile robot 1 is able to apply sealant, and a second configuration in which the mobile robot 1 is able to clean.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

Some embodiments may be in the form of a method of performing a process on a workpiece comprising moving a ground vehicle along a vehicle path that extends adjacent to the workpiece, and while the vehicle is so moving performing the following steps:
an end effector, which is attached to a multi-axis robot arm on the ground vehicle, performing the process along a process path on the workpiece (the process path and the vehicle path typically being in the same general direction and/or have the same general shape in plan-view, but will typically not be perfectly parallel to each other and neither will necessarily be in a straight line),
a control unit tracking, with the use of one or more optical scanners (preferably two or more spaced apart scanners) attached to the robot arm, one or more features on the workpiece, optionally at a location immediately ahead of the end effector and, as a result, determining the corrective movement required of the robot arm in order to keep the end effector on the process path on the workpiece, and
the control unit causing the robot arm to move in dependence on the corrective movement so determined (optionally with a limit being placed on how much corrective movement is permitted within a given time-frame, for example by use of a damping function and/or by use of a filter that smooths out the corrective movement effected over time). The vehicle path may be a set path such that the vehicle follows automatically at a substantially constant speed, the set path for example being determined in advance (for example, in dependence on the process path), so that the robot arm can reliably be within reach of the part of the process path being processed at any given time, noting that there will typically be parts of the process path not being processed which will be out of reach of the robot arm.

The process may be a cleaning process or a treatment process (such as a process of applying a material, such as a sealant), for example.

The control unit may comprise sub-units that need not be provided by the same piece of hardware. The control unit may be in the form of one or more suitably programmed computers / programmable logic controllers. The control unit may be provided separately from the ground vehicle and optionally also from the robot arm. Such a separately provided control unit may for example comprise a tracking module for receiving data (e.g. signals) from one or more tracking scanners that track a target path and a corrective movement determining module for determining, with the use of data from the tracking module concerning the location of a part of the target path, optionally immediately ahead, the corrective movement required of a robot arm in order to keep an end effector of the robot arm on the target path. The corrective movement determining module may be configured to command movement having 5 degrees of freedom, with the sixth degree of freedom being the movement of the robot arm along a path of motion of a ground vehicle that carries the robot arm.

## Claims

1. A method of interacting with a workpiece, the method comprising:
providing a mobile robot comprising an end effector and a tracker;
interacting the end effector with the workpiece and tracking the workpiece by the tracker; and
when the mobile robot is transporting in a transporting direction across the ground relative to the workpiece such that the tracker is tracking a first region of the workpiece, adjusting the mobile robot, by a control system and according to feedback from the tracker, to effect a position of the end effector relative to the workpiece to maintain interaction of the end effector with the second region of the workpiece trailing the first region in the transporting direction.

2. The method according to claim 1, wherein the end effector comprises a working envelope that is restricted relative to the workpiece when the mobile robot is stationary, and the working envelope is moveable relative to the workpiece by virtue of the mobile robot transporting relative to the workpiece.

3. The method according to claim 2, wherein the adjusting comprises adjusting the mobile robot to maintain interaction between the end effector and the workpiece to an extent of the workpiece that exceeds a maximum extent of the working envelope.

4. The method according to any of claims 1 to 3, wherein the interacting comprises providing a layer of continuous surface treatment on the workpiece on the basis of the interaction between the end effector with the workpiece when the mobile robot is transporting in the transporting direction.

5. A mobile robot for interacting with a workpiece as the mobile robot transports across the ground relative to the workpiece, the mobile robot comprising:
a tracker for tracking the workpiece;
an end effector for interacting with the workpiece based on feedback from the tracker, the end effector for example comprising an applicator for applying a sealant to the workpiece; and
a control system configured such that when the mobile robot is transporting in a transporting direction across the ground relative to the workpiece such that the tracker is tracking a first region of the workpiece, the control system causes the mobile robot to adjust according to the feedback from the tracker and effect a position of the end effector when interacting the end effector with the second region of the workpiece, the control system for example causing an applicator of the end effector to interact with the workpiece and to apply sealant.

6. The mobile robot according to claim 5, wherein the tracker is configured to track the workpiece by measuring the workpiece, and the control system is configured to adjust the mobile robot such that the end effector tracks the workpiece according to information identified about the workpiece on the basis of measurements by the tracker, and optionally wherein on the basis of the measurements by the tracker, the control system is configured to adjust the mobile robot such that the end effector tracks the workpiece according to a determined datum point formed by a plurality of identifiable features of the workpiece, and optionally wherein the determined datum point is an intersection of a plurality of notional features produced according to the plurality of identifiable features of the workpiece.

7. The mobile robot according to claim 6, wherein the tracker comprises a plurality of scanners for measuring the workpiece, and the control system is configured to adjust the mobile robot such that the end effector tracks the workpiece according to information identified about the workpiece on the basis of measurements obtained by the plurality of scanners.

8. The mobile robot according to any one of claims 5 to 7, comprising a compliance arrangement to resist movement of the end effector when interacting with the workpiece, wherein the control system is configured to adjust the mobile robot and effect the position of the end effector relative to the workpiece according to an allowable amount of resistance by the compliance arrangement,

9. A control system for a mobile robot, the control system is configured such that when the mobile robot is transporting in a transporting direction across the ground relative to a workpiece such that a tracker is tracking a first region of the workpiece, the control system causes the mobile robot to adjust according to feedback from the tracker and effect a position of an end effector of the mobile robot when interacting the end effector with the second region of the workpiece.

10. A robotic system comprising;
a vehicle, for example an automated guided vehicle (AGV), moveable across a floor in a transporting direction;
a robot mounted on the vehicle, the robot comprising:
a tracker for tracking the workpiece; and
an end effector to interact with the workpiece according to feedback from the tracker tracking the workpiece;
a control system configured to, when the robotic system is moving across the floor in the transporting direction such that the tracker is tracking a first region of the workpiece, adjust the robot according to the feedback from the tracker and effect a position of the end effector relative to the workpiece when interacting with the second region behind the first region in the transporting direction and during movement of the vehicle and the robot across the floor in the transporting direction.

11. The robotic system according to claim 10, comprising a determiner to determine a path correction of the end effector on the basis of a plurality of identifiable features of the workpiece obtained from measurements by the tracker, and the control system is to adjust the robot according to the path correction, and optionally wherein the determiner is separate from the robot such that the path correction is not determined by the robot but is receivable by the robot from the determiner, and optionally wherein the determiner is configured to determine the path correction according to historical measurements by the tracker associated with a measurement region of the workpiece.

12. The robotic system according to claim 11, wherein the determiner is configured to pass the path correction through a filter, and the control system is configured to adjust the robot according to the path correction passed through the filter, and optionally wherein the filter comprises a moving average such that the path correction used to adjust the robot is a moving average path correction.

13. A workpiece, for example a component of a wing structure of an aircraft, having a surface treated by a robot mounted on a vehicle, wherein the surface has a dimension greater than a reach of the robot such that the surface comprises a layer of continuous treatment on the basis of interaction between an end effector of the robot with the workpiece during transportation of the robot by the vehicle across a floor in a transporting direction, the robot being adjusted to effect a position of the end effector based on feedback from a tracker tracking the workpiece.

14. The workpiece according to claim 13, wherein the workpiece is a component of a wing structure of an aircraft.

15. A computer program comprising instructions, which, when the program is executed by a computer, cause the computer to carry out the method of any of claims 1 to 4.
